# EUROPEAN PATENT SPECIFICATION

(11) **EP 4 256 953 B1**
(45) Date of publication and mention of the grant of the patent: **02.07.2025**
(21) Application number: 23167204.9
(22) Date of filing: 07.04.2023
(51) Int. Cl.: A01K 1/01

(54) **MANURE CLEANER, MANURE PROCESSING SYSTEM AND METHOD FOR MANURE CLEANING AND PROCESSING**
MISTREINIGER, MISTVERARBEITUNGSSYSTEM UND VERFAHREN ZUR MISTREINIGUNG UND -VERARBEITUNG
NETTOYEUR DE FUMIER, SYSTÈME DE TRAITEMENT DE FUMIER ET PROCÉDÉ DE NETTOYAGE ET DE TRAITEMENT DE FUMIER

(30) Priority: 07.04.2022 NL 2031528
(43) Date of publication of application: 11.10.2023
(73) Proprietor: Farm Eco Systems BV, 6136 CN Sittard (NL)
(72) Inventor: HENSGENS, Michael Elisabeth Gerard, 6136 CN Sittard (NL); DE ROIJ VAN ZUIJDEWIJN, Joseph Alphons Emile Vincentius, 6136 CN Sittard (NL)
(74) Representative: Brantsandpatents bv

(56) References cited:
- EP-A1- 0 676 134
- EP-A1- 3 354 130
- SE-B- 436 463
- US-A1- 2003 005 531

## Description

### TECHNICAL FIELD

The invention relates to a manure cleaner for hygienizing the stable floor and removing manure from a stable floor, possibly with an associated system for processing the manure.

Herein is also disclosed a method for hygienizing a closed animal-friendly stable floor and removing manure from a stable floor and processing it.

Herein is also disclosed the use of the manure cleaner of the invention.

Herein is also disclosed a method for placing the manure cleaner of the invention. Specifically, the above aspects provide systems, cleaners, and methods for collecting manure from a stable floor.

### PRIOR ART

Removing manure and cleaning stables has been a difficult and time-consuming activity for humans for centuries. In recent years, automated devices have been developed to assist in this cleaning process.

Such a device is known, inter alia, from ES2270630 (ES '630). ES '630 describes an automated cleaning device for stables. This cleaning device comprises a cleaning arm connected to a nozzle. A computer system controls the cleaning device and can independently repeat a cleaning operation once the desired operation has been demonstrated manually.

Also known is the stable cleaning device from DE102017109130 (DE '130). The '130 relates to a robotic vehicle with cleaning tools. Image processing software is able to detect a floor surface to be cleaned, determine the position of the robotic vehicle within a reference system, and pass the information to the robotic vehicle. The robot vehicle can move autonomously and is adapted to clean a floor surface of an open stable. Also known is the construction from NL1002487 (NL '487). NL '487 describes manure pick-up means for automatically cleaning a stable floor. Detection tools look for objects that need to be removed. Pick-up means are suitable for picking up or scooping up manure. They are often mounted on the ceiling of the stable and are suitable for raising the manure vertically out of reach of the animals in the stable.

A final document is EP 0 676 134. A reciprocating manure cleaner is provided herein, which is not suitable for thoroughly removing material, however. Additionally, the facility lacks further features that would optimize its operation.

These known devices require a large installation cost and advanced software. They are often unable to completely clean the stable floor of manure and/or can be damaged by the animals in the stable. The present invention aims at solving at least some of the above-mentioned problems or disadvantages.

### SUMMARY OF THE INVENTION

The present invention relates to a manure cleaner according to claim 1.

The manure cleaner has a sturdy construction, suitable for not being damaged in an environment with animals. Because the manure cleaner pushes the manure with the sweeping elements and does not lift it, less energy is consumed. The manure cleaner is capable of efficiently, frequently and thoroughly removing the manure from the stable floor. Preferred forms of the device are shown in claims 2 to 14.

Optimizing the cleaning process has the advantage, among other things, that the stable floor surface can be chosen where cleaning is most needed.

### DESCRIPTION OF THE FIGURES

**Figure 1** shows a schematic top view of the discharge gutter according to an embodiment of the present invention.
**Figure 2** shows a detailed representation of a side view of the cleaning frame according to an embodiment of the present invention.
**Figure 3** shows a detailed view of the cleaning frame propulsion system according to an embodiment of the present invention.
**Figure 4** shows a schematic representation of the three consecutive cleaning steps performed by the cleaning frame according to an embodiment of the present invention.
**Figure 5** shows a schematic top view of the discharge gutter and cleaning frame according to an embodiment of the present invention.
**Figure 6** shows a detailed representation of a side view of the slope and cleaning frame according to an embodiment of the present invention.
**Figure 7** shows a schematic side view of a cleaning frame according to an embodiment of the present invention.
**Figure 8** shows a schematic top view of a cleaning frame according to an embodiment of the present invention.
**Figure 9** shows a detailed representation of a sweeping element according to an embodiment of the present invention.
**Fig. 10** shows a schematic cross-section of a disposal unit, at one end of a belt with sweeping elements, according to an embodiment of the present invention.
**Fig. 11** shows a detailed representation of a disposal unit with auger according to an embodiment of the current invention.
**Fig. 12** shows an end of a belt having a sweeping element guide positioned to hold the sweeping elements in the retracted position, according to an embodiment of the present invention.
**Fig. 13** shows an end of a belt having a sweeping element guide positioned to hold the sweeping elements in the sweeping position, according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise", "comprising", "consist of", "consisting of", "provided with", "include", "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

The Netherlands and other countries with intensive dairy farming are struggling with excessive emissions of ammonia (NH₃) and methane (CH₄), partly caused by manure production in agriculture, including the dairy sector. Dairy cows in the Netherlands, for example, produce around 38 million tons of manure annually (year 2021). The surplus manure is spread on farmland by Dutch farmers. The Dutch government is constantly taking, often short-term, measures to reduce the emissions of ammonia, methane, and phosphate. These constant new measures endanger the continuity of the dairy sector. The farmer is responsible for their share of the manure problem. They must solve this problem themselves on their farm, but the necessary (technical) means and instruments for an integrated approach and solution are lacking. A successful solution is only possible with an integrated, small-scale, technically reliable, and economically viable approach at the farm level.

The invention relates to a manure cleaner for hygienizing the stable floor and removing manure on a stable floor comprising, a mobile unit, wherein the mobile unit comprises a cleaning frame with sweeping elements, suitable for moving manure, wherein the cleaning frame extends in a first direction, and wherein the sweeping elements are provided on the cleaning frame movably along the first direction; and the manure cleaner is movable in a second direction, wherein the second direction is different from the first direction and preferably substantially perpendicular to or at an angle thereto. Furthermore, the mobile unit comprises at least one belt, with said belt secured around at least 2 tension rollers on the cleaning frame and configured to rotate around the tension rollers, wherein the tension rollers extend along the second direction, with the sweeping elements being provided on the at least one belt.

The belt is configured to rotate around the tension rollers, wherein the tension rollers extend along the second direction. In this way, the belt extends substantially over the first direction. The belt thus typically runs parallel to the stable floor at the bottom, and preferably also parallel to the stable floor at the top. Working with a conveyor belt guarantees that the sweeping elements always sweep material from a first end of the cleaning frame to the second end, and thus to one side of the stable floor, so that it can be collected (and removed) there in a simple manner. Moreover, this allows for continuous rotation and sweeping in this way, wherein the sweeping elements are brought along the top side back to the first end of the cleaning frame to come back there at the bottom, to the second end of the cleaning frame.

An additional advantage of the continuous process is that the sweeping elements can be specifically shaped and oriented to optimally sweep/scrape the material. With an alternating back and forth movement, as in the prior art, the sweeping elements are sub-optimal, and there is also the risk that material (manure) is simply moved back and forth, instead of completely to the side for removal of the material.

Because the manure cleaner comprises a cleaning frame with sweeping elements, suitable for moving manure, wherein the cleaning frame extends in a first direction, and wherein the sweeping elements are provided on the cleaning frame movably along the first direction; and the mobile unit is movable in a second direction, wherein the second direction is different from the first direction and preferably substantially perpendicular to it, the entire surface can be made completely manure-free. The sweeping elements are able to move the manure. Because these sweeping elements can move in at least two different directions, the sweeping elements can easily clean the entire surface periodically. Quickly removing the manure from the stable prevents the formation of ammonia and methane. According to an embodiment, the sweeping element comprises a brush, a rubber plate, a plastic plate, a steel brush, or a metal plate. A wooden plate is not recommended due to the risk of contamination by bacteria or viruses.

According to an embodiment, the sweeping element comprises a scraper and a holder in which the scraper is fixed. According to an embodiment, the part of the sweeping element that comes out of the holder has the shape of a beam. According to an embodiment, the part of the sweeping element that comes out of the holder has the shape of a prism where the ground surface is a trapezoid where the lengths of the two parallel sides differ from each other by 5-70%.

According to an embodiment, the angle between the first direction and the second direction is 20-160°, more preferably 40-140°, even more preferably 60-120°, even more preferably 70-110°, even more preferably 80 -100° and most preferably 85-95°. Because the angle between the first and second direction differs, the manure cleaner is able to choose the most efficient route to remove the manure the fastest. According to an embodiment, the manure cleaner comprises a camera suitable for detecting where objects, other than animals, lie on the stable floor, preferably this camera is attached to the mobile unit.

According to an embodiment, the manure cleaner comprises a guide frame, wherein the guide frame comprises 2-5 parallel guides, suitable for positioning the mobile unit between them and moving it along them. According to an embodiment, the manure cleaner comprises a guide frame, wherein the guide frame comprises two parallel guides, suitable for positioning the mobile unit between them and moving it along them. In a variation, only a single guide is provided.

Because the manure cleaner comprises a mobile unit and a guide frame, no advanced software and/or measuring instruments are required to guide the mobile unit. The positioning of the mobile unit depends on the guide frame. This guide frame can be placed along 2 opposite sides of the surface where the manure is to be collected on the stable floor. Preferably, the guide frame is placed along the two longest sides of this surface.

According to an embodiment, the manure cleaner comprises a guide frame, wherein the guide frame comprises one guide adapted to allow the mobile unit to move along. According to an embodiment, the manure cleaner comprises a guide frame, wherein the guide frame comprises two parallel guides, suitable for positioning the mobile unit between them and moving it along them. According to an embodiment, the manure cleaner comprises a guide frame, the guide frame comprising three parallel guides, wherein the middle guide is suitable for supporting the mobile unit and the two outer guides are suitable for positioning the mobile unit between and allowing it to move along.

Thanks to the guide frame, no measuring instruments, artificial intelligence, or recognition software are needed to guide the mobile unit. This guide frame can be easily placed along the surface where the manure needs to be collected on the stable floor.

According to an embodiment, the mobile unit comprises wheels and a motor for driving the wheels. Because the mobile unit is self-propelled, the mobile unit can give better priority to places that need to be cleaned. By means of sensors and analysis of the data obtained from these sensors, an optimal cleaning route can be determined. According to an embodiment, the mobile unit comprises caterpillar wheels or 4-12 wheels, preferably 4, 6 or 8. According to an embodiment, the mobile unit comprises a number of wheels depending on the length of the mobile unit, preferably 4+X, 2+X, 2+2*X or 4+2*X wheels, where X is the length of the mobile unit, expressed in meters and rounded up. According to an embodiment, the mobile unit comprises a collection tray suitable for collecting manure. This collection tray comprises an opening through which manure can be received, and an outlet along which the manure can be discharged, preferably via an interface that connects to an external manure collection unit. This opening and outlet may possibly coincide, but alternatively be different.

According to an embodiment, the mobile unit comprises at least one or at least two parallel belts, each of which is provided with at least 2 sweeping elements, with each belt secured around 2 tension rollers on the cleaning frame and configured to rotate around the tension rollers, wherein the tension rollers extend along the second direction.

Since the mobile unit comprises at least one or at least two parallel belts on which at least 2 sweeping elements are provided each time, and typically a plurality thereon of at least 10, 20 or more equidistantly positioned sweeping elements, with each belt secured around 2 tension rollers on the cleaning frame and configured to rotate around the tension rollers, the mobile unit can sweep away the manure. In contrast to, for example, an automated system with grabbers that picks up the manure, the manure is rather pushed. This costs less energy and ensures better cleaning of the stable floor surface. If at least two parallel belts are present, at least two different types of cleaning can be performed. According to an embodiment, the mobile unit comprises at least 3 parallel belts, the two outer belts being suitable for sweeping away the manure. According to an embodiment, the mobile unit comprises at least two parallel belts on which a sweeping element is provided every 10-50 cm, preferably every 20-30 cm.

Because the parallel belts are secured around different tension rollers, their movement can be controlled independently. The mobile unit preferably also comprises one or more nozzles (stationary or movable along the first direction) for spraying the stable floor with water and/or other liquids, optionally provided with cleaning products. In this way, the stable floor can be cleaned in several phases, and complete hygienization can be guaranteed.

An additional advantage is that this system works optimally with a closed stable floor, preferably provided with a plastic comprising (rubber, for example) top layer. Many stables have an open structure with holes or gaps, whereby the manure is actually pushed into the holes and rinsed by a sweeping module or manually, and where a collection basin is provided under the floor in which the manure is collected. However, this means that the manure and its by-products remain much longer in the stable, and microbial growth remains possible for longer, and the formation of ammonia and methane is not actively counteracted. The current system aims to move the manure to the sides of the stable floor, where it can be collected in a more compact system, making the removal and subsequent processing easier, faster, and more efficient, thus avoiding the above-mentioned problems.

Because the mobile unit comprises at least two parallel belts, each of which is provided with at least 2 sweeping elements, it is prevented that a thin layer of manure is left behind. If a thin layer of manure remains, ammonia can still be formed. Sweeping once would possibly partly spread the manure and thus create a manure film. Because the parallel belts are suitable for cleaning in several phases, the stable floor is quickly and completely hygienized. Hygienization comprises the collection and phased cleaning of the stable floor and the removal of manure. Preferably, the stable floor is hygienized at least every 1 hour, more preferably every 30 minutes, even more preferably every 20 minutes. It should be understood that the frequency can be adjusted as desired.

Alternatively, sweeping can also be done with one belt, operating in two phases, with an intermediate rinse between the phases using one or more nozzles on the mobile unit (stationary or movable along the first direction). In this way, the far-reaching hygienization of the stable floor can also be guaranteed, which is lacking in known systems.

In a preferred embodiment, the mobile unit comprises only one belt, where the belt is secured around at least two tension rollers on the cleaning frame.

Preferably, the belt of the mobile unit is a conveyor belt, wherein the sweeping elements are provided on the belt, preferably mounted on the conveyor belt with an angle relative to the longitudinal direction of the conveyor belt between 75° and 105°, preferably between 80° and 100°, and more preferably between 85° and 95°, most preferably about 90°. The use of a conveyor belt offers the above-mentioned advantages (directionality in discharge, optimization of sweeping elements as a result).

Placing the sweeping elements substantially perpendicular to the longitudinal direction ensures that the material is carried along with the sweeping elements as much as possible and is not partially diverted to the sides. In that respect, an angle of 90° is optimal. However, it is possible to place the sweeping elements at a non-perpendicular angle, in order to avoid that swept material would "escape" on either side of the sweeping element during the movement, and instead be forced to move along on the one hand in the longitudinal direction, but on the other hand can also deflect to one side. In that case, the sweeping elements are oriented so that they divert the material to the side in which the manure cleaner is moved according to the second direction (in such a way that the sense of movement of the manure cleaner along the second direction and the sense of movement of the sweeping elements along the first sense define a coordinate system, where the sweeping element, when passing through the zero point of the coordinate system, extends into the second and fourth quadrants). In this way, after a subsequent movement in the second direction, the diverted material is further carried along.

In a preferred embodiment, the sweeping elements are substantially flat, forming an angle to the belt, where the angle can be adjusted in a controlled manner between a sweeping position and a retracted position. The angle at the sweeping position is between 30° and 90°, preferably between 45° and 80°, and the angle at the retracted position is between 0° and 30°, preferably between 0° and 20°.

The double position allows the invention to be used in two modes. The first mode is a sweeping mode, in which the sweeping elements - when placed correctly - extend against or very close to the stable floor. Here the system preferably also allows further fine-tuning to ensure this, so that even in the case of non-perfect placement, this can be compensated for. However, this presents the problem that when the manure cleaner has to be moved along the second direction, e.g., completely to the starting point, the sweeping elements are still folded out and already cleaned areas of the floor may be soiled again by manure that is still attached to the sweeping elements.

The second mode, retracted position, allows the sweeping elements to be oriented "flatter" against the belt, in such a way that they no longer come close to or against the stable floor. In this way, the manure cleaner can be moved along the second direction without polluting clean zones. In addition, this can also be used to bridge positions where, for example, there are raised elements, which can damage the sweeping elements.

In a further preferred embodiment, the sweeping elements are provided for this purpose with a lateral protrusion, preferably a pin or similar element, and in particular preferably provided on both upright sides of the sweeping elements, at a certain distance from the "foot" of the sweeping element, where it attaches to the belt. The mobile unit additionally comprises at least one, preferably two, sweeping element guides that guide the lateral protrusion along the bottom of the belt (and preferably also at the top). The sweeping element guide is adapted for guiding the protrusion along two (parallel) axes. A first axis is located closer to the surface of the belt than the second axis, wherein the first axis serves to move the sweeping elements in the retracted position, and the second axis serves to move the sweeping elements in the sweeping position (folded out).

The sweeping element guide may be provided movable on the one hand between the two axes, or a deflector may be provided which directs the protrusion above or below the sweeping element guide, wherein the deflector is controllable.

This system is at least provided on the side of the mobile unit that faces the stable floor but can also be provided on the side that faces away from the stable floor. In this way, the maximum height of the manure cleaner is minimal, and it does not hinder the animals (or less so).

Preferably, a sweeping element guide is provided on the side of the mobile unit directed away from the stable floor, which always keeps the sweeping elements in a retracted position when they move at the top, in order to limit the height of the whole as much as possible. This is thus also possible without such a sweeping element guide at the bottom. In that case the sweeping elements are provided with a lateral protrusion, preferably a pin, preferably provided on both upright sides of the sweeping elements. The mobile unit comprises at least one sweeping element guide for guiding the lateral protrusion of the sweeping elements, preferably on each lateral side of the mobile unit over substantially the entire length, wherein the sweeping element guide is configured to guide the lateral protrusion of the sweeping elements into a position wherein the sweeping elements form a maximum angle with respect to the belt of 30°, preferably of 25°, more preferably 20°, 15°, 10° or 5°, when the sweeping elements are on the side of the belt facing away from the stable floor.

By providing a pin on both sides, the sweeping element can be held in position very reliably, without allowing twisting. In this way, the sweeping element can also develop the necessary pressure and force to sweep along manure, without running the risk of becoming bent, because the torsion is better absorbed.

In a preferred embodiment, the manure cleaner further comprises a disposal unit at one end of the cleaning frame, beyond one of the tension rollers. The disposal unit is configured to receive material supplied by the sweeping elements, and comprises a curved inner surface centered about the tension roller (preferably partially circular) dimensioned such that the sweeping elements are moved against the inner surface during rotation of the belt. The manure cleaner furthermore comprises a collection tray positioned for collecting material from the disposal unit.

The disposal unit ensures that the sweeping elements, at the end where they are rotated upwards, press and entrain the entrained material into the disposal unit and transport it upwards via the curved inner surface. Once at the highest point, the entrained mass falls down into the collection tray, from where the mass can be further discharged.

More preferably, the collection tray is provided with a horizontal auger or worm screw, which moves collected material in the collection tray to a discharge zone of the collection tray. By moving the material into the collection tray in this way, it is simply added to already collected slurry and manure, which is already in front of the beam.

In a preferred embodiment, the mobile unit has a maximum height of 40 cm, preferably a maximum height of 30 cm and most preferably of 25 cm. By limiting the height with the measures discussed above, the animals are inconvenienced to a minimum and they can easily step over the manure cleaner, so that there is minimal intrusion. Preferably, the system has a similar maximum width, again to minimize disturbance to the animals.

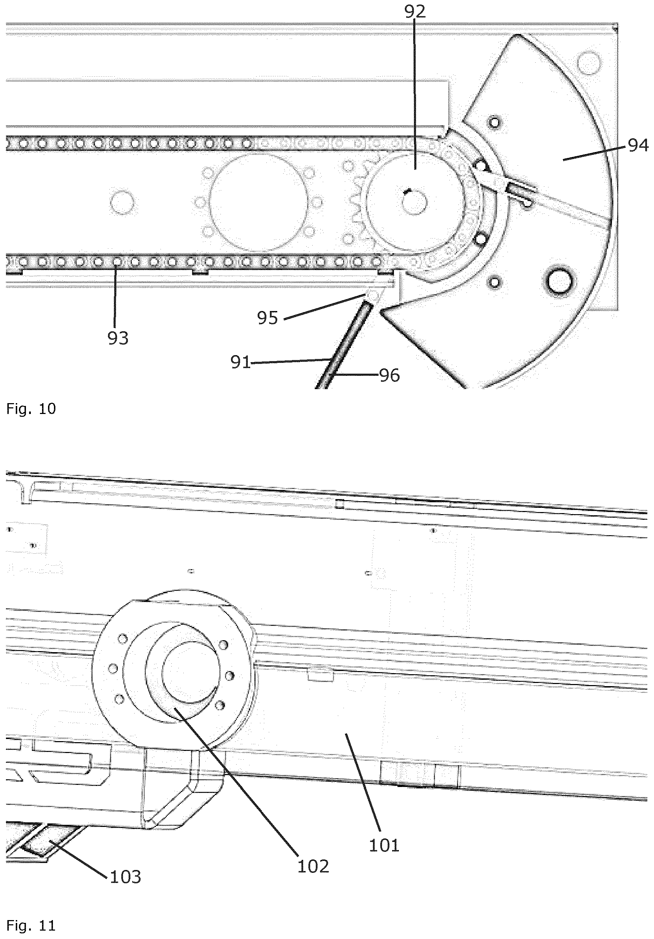

In a preferred embodiment, the sweeping elements are provided as comprising a rigid holder, which is connected to a first end on the belt (typically with adjustable angle), and wherein a somewhat flexible sweeping plate (e.g., metal) is provided at the second end of the holder, opposite the first end. The sweeping plate is herein sufficiently anchored to the holder to follow it but is slightly deformable in order to be able to follow irregularities in the surface without damaging the sweeping plate or holder or belt, and in this way contact the surface as closely as possible when sweeping. For that reason, the sweeping plate is typically made of plastic to allow some degree of deformation. Other materials are also possible. Preferably, the sweeping plate is partially enclosed by the holder, as seen in Figures 10, 12 and 13.

The use of the holder also allows the pin/lateral protrusion to be placed on it, as discussed in a previous embodiment, which allows the holder to determine the position of the sweeping elements, as it is rigid.

According to an embodiment, the angle between the sweeping elements and the belt to which they are attached can be adjusted, preferably depending on the angle between the first and second directions. According to an embodiment, the angle between the sweeping elements and the belt to which they are attached is at most 10° different from the angle between the first and second direction, more preferably the angles are equal. According to an embodiment, the sweeping elements have a rectangular shape. According to an embodiment, the sweeping elements have a rectangular shape with one curved side.

According to a preferred embodiment, means for cleaning with liquid and/or air pressure are present on the cleaning frame, wherein the means are positioned suitable for wetting and/or cleaning the stable floor under at least one of the parallel belts.

Because means for cleaning with liquid and/or air pressure are present on the cleaning frame, wherein the means for cleaning with liquid and/or air pressure are positioned suitable for wetting the stable floor under at least one belt, both dry and wet cleaning of the stable floor can take place. A cleaning liquid is sprayed on the stable floor. This ensures complete removal of the manure, so that less ammonia is released in the stable. This improves the growing conditions for the animals and reduces ammonia (NH3) and greenhouse gas (CH4) emissions. According to a further embodiment, at least one or at least two belts are present on the frame and these means for cleaning with liquid and/or air pressure are located at the one belt or between the two parallel belts. Due to this positioning, a first dry cleaning can always take place, which removes a large part of the manure, and then a wet cleaning. According to another embodiment, three or more parallel belts are provided on the frame and the means for cleaning with liquid and/or air pressure are adapted to wet the surface under at least one of the middle parallel belts. Due to this positioning, a first dry cleaning can always take place, which removes a large part of the manure, and then a wet cleaning, followed by a second dry cleaning. The cleaning liquid is also wiped away in this way.

According to an embodiment, the means for cleaning with liquid and/or air pressure in the vicinity of the middle belt, are adapted to wet the surface below the middle belt. This means that the stable floor can also be cleaned with a cleaning liquid. According to an embodiment, the means for cleaning with liquid comprise a cleaning liquid, wherein the cleaning liquid contains an antimicrobial agent. Because the outer belts carry out a dry removal, the manure will largely be removed before the means for cleaning wet the stable floor. The means are preferably positioned suitable for wetting and/or cleaning the stable floor under the middle parallel belt. According to an embodiment, nozzles are present on the cleaning frame, wherein the nozzles are positioned suitable for wetting the stable floor under at least one of the parallel belts.

According to another embodiment, the sweeping element comprises a rubber or plastic plate.

Because the sweeping element comprises a rubber or plastic plate, the flexibility of the sweeping element is sufficient to push the variable amount of manure forward. The rigidity as well as the resistance of a rubber or plastic plate is sufficiently high for long-term use. According to another embodiment, the sweeping element comprises a brush.

According to an embodiment, the length of the mobile unit is at least 90% of the distance between the two parallel guides, preferably the guides support the mobile unit. If there is only one guide, the working width of the mobile unit is at least 90% of the width of the stable floor to be cleaned.

Because the length of the mobile unit is at least 90% of the distance between the two parallel guides, or the width of the stable floor, the mobile unit can clean the entire surface of the stable between each pass without having to move closer to a guide. The mobile unit only needs to be able to move in one direction to clean the stable surface. As a result, the mobile unit can be built more simply and solidly. The end point of the belt will always be in the vicinity of a guide. Because the guides support the mobile unit, the mobile unit is more resistant to forces developed by the animals in the stable. The animals will get used to the presence of the manure cleaner but can always step on it or block its movement. Because the mobile unit is also supported by the guides, the mobile unit is less likely to be bent or damaged. According to an embodiment, the mobile unit comprises wheels at the end and center.

According to an embodiment, a guide, in combination with weight-cushioning wheels at the bottom of the manure separator, will support the mobile unit. This makes the mobile unit more resistant to forces developed by the animals in the stable. The animals will get used to the presence of the manure cleaner but can always step on it or block its movement. Because the mobile unit is supported by the guide and weight-cushioning wheels, the mobile unit will be bent or damaged less quickly. According to an embodiment, the mobile unit comprises wheels at the end and center.

According to an embodiment, the mobile unit comprises a container for storing manure. According to a further embodiment, the mobile unit comprises a suction system, suitable for sucking the manure collected by the manure cleaner into the container for the storage of manure. In one embodiment, the mobile unit comprises a tube at a first end of the mobile unit and a pump.

According to an embodiment, a collection tray is present in the discharge gutter, into which the manure collected by the manure cleaner can be pushed and wherein the manure can be dumped from the discharge bin onto the manure processing system, preferably via an interface that connects to an external manure collection unit of the manure processing system.

Because a collection tray is provided in the discharge gutter, into which the manure collected by the manure cleaner can be pushed and wherein the manure can be dumped from the discharge bin onto the manure processing system, the manure can easily be removed from the stable floor and processed. This greatly reduces ammonia and methane emissions. According to an embodiment, a conveyor belt with collection trays is present in the discharge gutter. According to an embodiment, a conveyor belt is present in the discharge gutter to which the collection trays are attached.

According to an embodiment, the manure system comprises sensors suitable for obtaining measured values with regard to humidity, temperature, methane and/or ammonia content, preferably all, and suitable for controlling the operation of the mobile unit on the basis of these measured values.

Because the manure system comprises sensors, suitable for obtaining measured values with regard to humidity, temperature, methane and/or ammonia content, preferably all, and is suitable for controlling the operation of the mobile unit on the basis of these measured values, the operation of the mobile unit can be optimized. The humidity, temperature, airflow speed, methane and ammonia content give an indication of the amount of manure in the stable and how long it has been there. If these values are high, the frequency of cleaning could be increased. Temperature affects microbial breakdown and influences humidity and methane and ammonia levels. According to an embodiment, the sensors are linked to a reporting system. One of the main objectives of cleaning the floor of the manure lane is to limit ammonia emissions in the stable as much as possible. To determine whether this objective is being achieved, it is necessary to measure the ammonia emissions. According to an embodiment, sensors are mounted on both sides of the mobile unit, parallel to the belts. One sensor measures before cleaning and the other after cleaning.

According to an embodiment, the mobile unit comprises a cleaning frame, a belt around tension rollers, sweeping elements, means for cleaning with liquid and/or air pressure, sensors and a motor. According to a further embodiment, the sweeping elements are attached to the belt around the tension rollers, preferably at at least 1 point. According to a further embodiment, the motor is suitable for rotating the sweeping elements.

There is also disclosed a method for collecting manure on a stable floor and processing it, comprising: advancing a cleaning frame with sweeping elements in a direction of transport; moving sweeping elements mounted on the cleaning frame along a surface, in a sweeping direction different from the direction of transport and preferably substantially perpendicular thereto.

Because the method for collecting manure on a stable floor and processing it comprises the previous steps, the surface between the guide(s) and the stable wall can be cleaned in a simple manner. The parallel guide(s) determine where the cleaning frame with sweeping elements can advance. This assistance means that no software is required to scan the stable environment. Due to increasingly strict environmental legislation, it is better to process the manure as quickly as possible into a less harmful product. Frequent cleaning of the stable floor and the removal of manure will reduce the formation of ammonia and methane. Because the cleaning frame comprises sweeping elements, it can collect the manure on the stable floor. The rotation of these sweeping elements creates a pushing motion towards a discharge gutter at an end of the cleaning frame. According to an embodiment, the manure will be discharged to a manure processing system. According to an embodiment, a conveyor belt system is mounted in the discharge gutter, which transports the manure away.

According to an embodiment, the cleaning frame with sweeping elements moves along one guide and the cleaning frame comprises a running wheel. According to a further embodiment, the guide supports the cleaning frame at a first end and a running [wheel] supports a second end of the cleaning frame.

According to an embodiment, two parallel guides support the cleaning frame with sweeping elements and wherein the cleaning frame with sweeping elements moves between the two parallel guides and along the two parallel guides.

According to an embodiment, the angle between the sweeping direction and the direction of transport is 20-160°, more preferably 40-140°, even more preferably 60-120°, even more preferably 70-110°, even more preferably 80 -100° and most preferably 85-95°. Because the angle between the sweeping direction and the direction of transport differs, the manure cleaner is able to choose the most efficient route to remove the manure the fastest. According to an embodiment, the manure cleaner detects objects, other than animals, on the stable floor with a camera, this camera is preferably attached to the mobile unit.

According to an embodiment, the force with which the sweeping elements are pulled or pushed over the ground is adjusted to ensure that the sweeping elements, while pulling or pushing the manure, are positioned on the cleaning frame at an angle of 45-60° with respect to the stable floor.

Because the force with which the sweeping elements are pushed against the ground is adjusted, they can be positioned on the cleaning frame at an angle of 45-60° in relation to the stable floor while pushing or pulling the manure. The angle is measured in relation to the stable floor and in the direction in which the sweeping element moves. The angle of 45-60° is ideal for cleaning the stable surface. It is also best not to bend the sweeping elements during sweeping. This can also be avoided by adjusting the force with which the sweeping elements push downwards. If the sweeping elements are pushed crooked, pieces of manure can remain on the stable floor and cleaning does not proceed optimally.

According to an embodiment, water and electricity are supplied to the manure cleaner via water and electricity lines in a guide channel, wherein the guide channel is located along one of the parallel guides.

Because water and electricity are supplied to the manure cleaner via water and electricity lines in a guide channel, wherein the guide channel is located along one of the parallel guides, the manure cleaner can continuously clean the stable floor. Breaks for charging a battery or fluid reservoir are no longer necessary. By cleaning the stable floor more frequently, the accumulated amount of manure is lower and the sweeping elements can work efficiently. Because the guide channel is located along a guide, it is more shielded from the animals, so that the risk of damage is reduced.

According to a further embodiment, self-retracting pipe reels roll up and unroll water and electricity lines, depending on the movements of the cleaning frame.

Because self-retracting pipe reels roll up and unroll water and electricity lines, depending on the movements of the cleaning frame, the supply of water and electricity to the cleaning frame can be guaranteed. It is important to be able to supply the cleaning frame with electricity and water at all times. Rolling up the cables when they are too long prevents them from getting tangled. According to an embodiment, the pipe reels comprise a reel; a motor capable of turning the reels; and a guide suitable for guiding the lines on and off the reels.

There is also disclosed a use of the manure cleaner according to the invention for collecting manure on a stable floor and/or processing it.

This use for collecting manure on a stable floor and/or processing it, leads to a rapid removal of manure, which improves the health of the animals and reduces methane and ammonia emissions. This usage is completely automatic and requires little to no human interaction. Cleaning stable floors has always been a difficult and time-consuming activity but can be avoided through this use.

There is also disclosed a method for placing the manure cleaner according to the first aspect, comprising: placing one guide along one side of the stable, connecting a cleaning frame with sweeping elements perpendicularly to the guide; placing a second guide parallel to the first guide, at a distance suitable to support the cleaning frame with sweeping elements. Preferably, an outlet is provided on the side where the second guide is placed.

Because the method for placing the manure cleaner comprises the preceding steps, the manure cleaner can be built up in a simple manner. Moreover, no additional software training is required before the manure cleaner can start. The speed at which the cleaning frame with sweeping elements moves over the guides depends on the amount of manure on the stable floor. Because one guide is placed on the side where the animals eat, this surface of the stable floor is regularly cleaned. As a result, the animals are in a clean environment when they eat. This also increases their well-being, reduces stress and reduces the need for antibiotics.

Each feature described in this document, above as well as below, may relate to any of the various aspects of the present invention.

In the following, the invention is described by way of non-limiting examples or figures which illustrate the invention, and which are not intended or construed to limit the scope of the invention.

### DESCRIPTION OF THE FIGURES

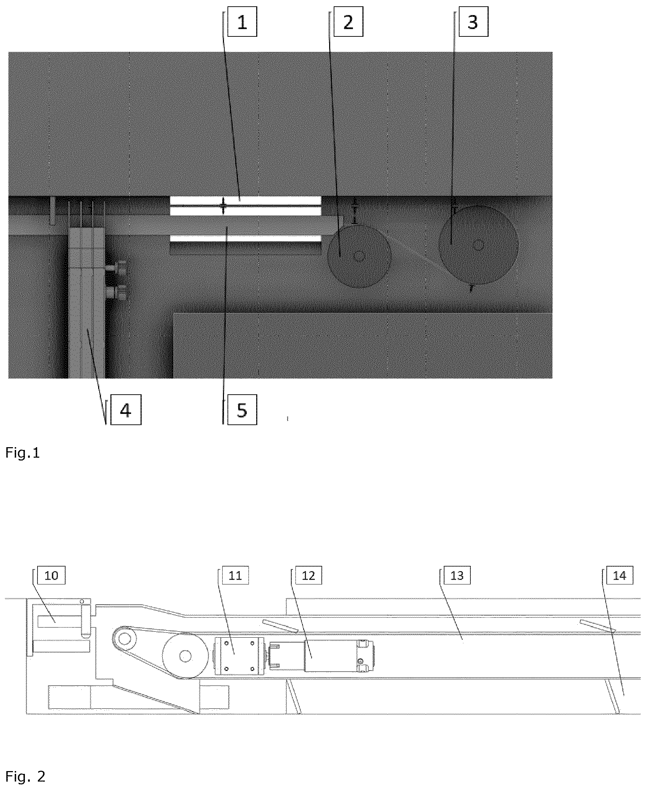

**Figure 1** shows a schematic top view of the discharge gutter according to an embodiment of the present invention.

The discharge bin **1** is always located along the guides and at an end of the manure cleaner **4.** The discharge bin **1** is used for discharging the manure in the discharge gutter to a manure processing system. The manure is always discharged by a discharge bin **1** in one direction. The return gutter **5** serves to return the discharge bin **1.** Both gutters are next to and against each other. The return gutter, which is closest to the side wall of the stable, is sealed from above with a cover. The discharge gutter is open at the top. The manure is collected and taken away in this. To prevent the cows from stepping into this gutter, it is covered with a grate, through which the manure falls into the discharge gutter, and which is too fine for cow feet. The manure in the discharge gutter **1** is moved by a cable around a first tension roller **2.** A second tension roller, the driving tension roller **3,** causes the first tension roller to rotate and the discharge gutter **1** to move. The manure cleaner **4** moves perpendicular to the discharge gutter. The manure that the manure cleaner pushes ends up in the discharge gutter **1.**

**Figure 2** shows a detailed representation of a side view of the cleaning frame according to an embodiment of the present invention.

The manure cleaner rests on the parallel guides with a support arm **10.** This support arm **10** is mounted on the parallel guides and can move in the viewing direction according to this figure. The gearbox reducer **11** rotates the parallel belt **13** on the cleaning frame. This gearbox reducer **11** is driven by an electric motor **12.** The sweeping elements **14,** sometimes called scrapers, are mounted on the belt **13.**

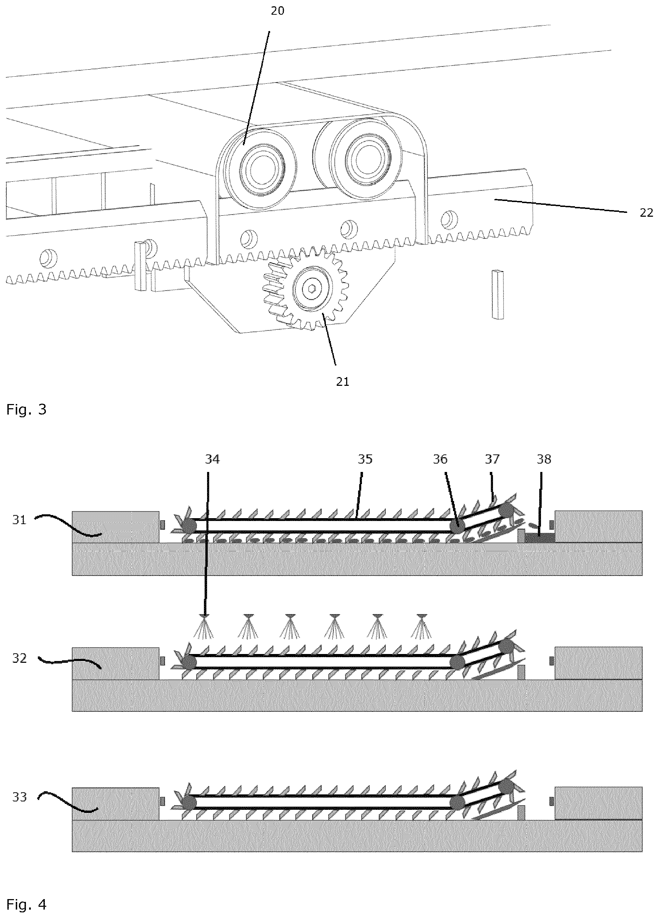

**Figure 3** shows a detailed view of the cleaning frame propulsion system according to an embodiment of the present invention.

The cleaning frame moves by rotation of a roller wheel **20** on a gear-rack **22.** The roller wheel **20** is located above the gear-rack **22.** The teeth of the gear-rack **22** point downwards and are connected to a pinion **21.** This pinion **21** is driven by a motor and is located on both sides of the cleaning frame.

**Figure 4** shows a schematic representation of the three consecutive cleaning steps performed by the cleaning frame according to an embodiment of the present invention.

The cleaning frame comprises three belts with sweeping elements. The cleaning frame moves over the stable floor. The first belt performs a pre-scraping step **31.** The second belt performs a wet cleaning step **32** and the third belt performs a dry post-scraping step **33.**

The different steps of the cleaning process are carried out by a cleaning frame with a belt **35** with sweeping elements **37,** spun around tension rollers **36.** During the first step, i.e., the pre-scraping step **31,** the manure is pushed into the discharge gutter **38.** During the second step, i.e., the wet cleaning step **32,** means for cleaning with liquid and/or air pressure **34** moisten the stable floor with a cleaning liquid. The belt **35** rotates around the tension rollers **36** and pushes part of the cleaning liquid and part of the remaining manure after the first cleaning step to the discharge gutter **38.** During the third step, i.e., the post-scraping step **33,** remaining manure and cleaning liquid are pushed to the discharge gutter **38.**

Note that if the cleaning frame moves in the other direction over the stable floor, the function of the first and third belts are interchanged. The first and third belt are suitable for performing both the first and third cleaning steps.

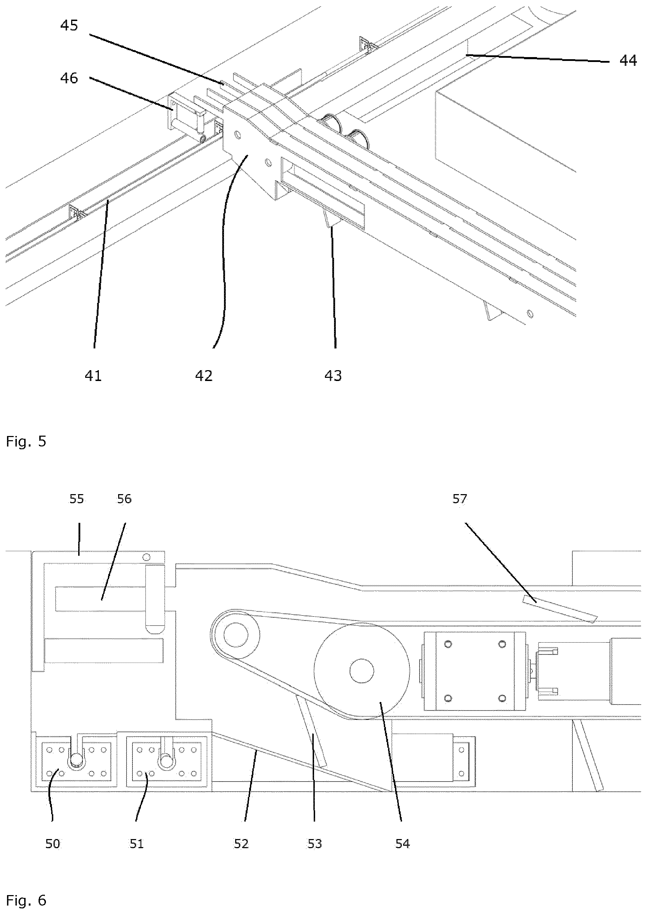

**Figure 5** shows a schematic top view of the discharge gutter and cleaning frame according to an embodiment of the present invention.

The cleaning frame **42** is suitable for pushing manure on the stable floor into the discharge bin **44** with the sweeping elements **43.** The cleaning frame comprises four support arms **45** at the end. These support arms **45** are attached to a coupling element **46.** Only one coupling element **46** is shown, but several may be present. A gear-rack **41** is designed to support the cleaning frame and allow it to move forward, as described in Figure 3.

**Figure 6** shows a detailed representation of a side view of the slope and cleaning frame according to an embodiment of the present invention.

The open discharge gutter **51** and closed discharge gutter **50** are mounted on the stable floor. The discharge gutter which is closest to the side wall of the manure lane, i.e., the closed discharge gutter **50,** is sealed from above with a cover. The other discharge gutter, i.e., the open discharge gutter **51,** is open at the top. The manure is collected and taken away in this. To prevent the cows from stepping into this gutter, it is covered with a grate, through which the manure falls into the discharge gutter, and which is too fine for cow feet. A pulling system (with a cable, chain and/or rope, etc.) through both drainage gutters. This rotates like a carousel through the discharge gutters as described in Figure 1.

The top of the discharge gutter is higher than the stable floor. Because a slope **52** is provided, the sweeping elements **53** can push the manure upwards into the discharge gutter. In the collapsed state **57,** the sweeping elements will move back to the other side of the stable floor by rotation of the belt around tension rollers **54.** The manure cleaning frame is attached to a coupling element **55** via a support arm **56.** The gear-rack connection is described in detail in Figures 3 and 5.

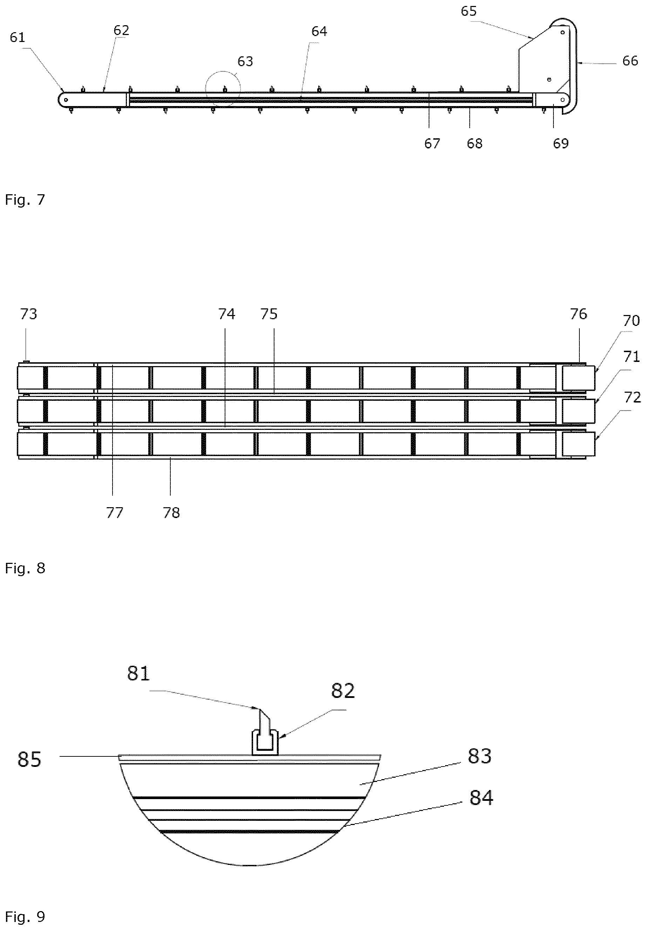

**Figure 7** shows a schematic side view of a cleaning frame according to an embodiment of the present invention.

The first tension roller **61** and motor (not shown) are together under a protective cover **62.** This protective cover is made of metal, for example stainless steel. The first tension roller **61** is designed to rotate a belt when driven by the motor. The lower belt **68** will move from the first tension roller **61** towards the second tension roller. The upper belt **67** returns from the second tension roller **69** to the first tension roller **61.** A reinforcement bar **64** is located between the lower and upper belt, from the first tension roller **61** to the second tension roller **69.** This reinforcement bar protects the cleaning frame, for example from forces developed by animals in the stable. There are sweeping elements **63** on the belt. The rotating belt with sweeping elements can pull or push manure on the stable floor in the direction of the manure storage container **65.** A suction system **66** will suck the manure, which has been carried by the lower belt **68** to the second tension roller **69,** up into the manure storage container **65.** Of the suction system **66,** only the tube through which the manure is transported upwards is visible in this figure.

**Figure 8** shows a schematic top view of a cleaning frame according to an embodiment of the present invention.

The cleaning frame comprises a first tension roller **73** and a second tension roller **76.** Between the two tension rollers, 3 belts are provided with sweeping elements **70, 71, 72,** suitable for carrying out three cleaning steps.

During the first step, i.e., the pre-scraping step, the manure is pushed into the discharge gutter by the first belt **70.** During the second step, i.e., the wet cleaning step, means for cleaning with liquid and/or air pressure moisten the stable floor with a cleaning liquid. The second belt **71** rotates around the tension rollers **73, 76** and pushes part of the cleaning liquid and part of the remaining manure after the first cleaning step to the discharge gutter. During the third step, i.e., the post-scraping step, remaining manure and cleaning liquid is pushed to the discharge gutter with the third belt **72.**

The cleaning frame must be able to withstand forces developed by animals in the stable and therefore comprises a protective cover for the sides **77, 78.** Between the first and second and between the second and first belt, the cleaning frame comprises reinforcement bars **74, 75,** which prevent the distance between the first tension roller **73** and the second tension roller **76** from changing. Animals stepping on the cleaning frame could bend the belts causing them to break or deform the tension rollers.

**Figure 9** shows a detailed representation of a sweeping element according to an embodiment of the present invention.

A sweeping element comprises a scraper **81,** for example made of rubber and a holder **82.** The holder is suitable for attaching the scraper to the belt **85.**

Figure 9 further shows a circular cut-out of the reinforcement bar **84** and the opening between the reinforcement bar and the belt **83.** The size of the opening is suitable to allow a small indentation of the belt but to provide sufficient support when greater forces are applied to the belt. This circular cut-out was made from Figure 7, at reference sign **63.**

**Figure 10** shows a side section of the end of a belt, with two sweeping elements **91** mounted thereon. The sweeping elements **91** are rotated around the tension roller **92** with the belt **93.** At the end of the belt **93** is provided a disposal unit **94,** in the form of a section of a roll, closed on both sides to ensure that the collected material cannot run off the sides. The sweeping elements **91** substantially abut against the inner surface of the disposal unit **94,** thus driving the collected mass upwards, until it comes to a highest point, and is carried back along with the belt **93** to the other end, via the top of the belt **93.** The mass that has been carried upwards falls down at this point, into the collection tray **94** provided for this purpose.

The sweeping elements **91** here consist of a rigid holder **95** holding a sweeping plate **96.**

**Figure 11** shows a side view of the collection tray **101,** with an auger **102.** This auger **102** carries mass from the collection tray **101** to the front of the main beam, where it is added to already collected slurry and manure. The disposal unit **103** is also visible here, which drives the mass from the sweeping elements to the collection tray **101.**

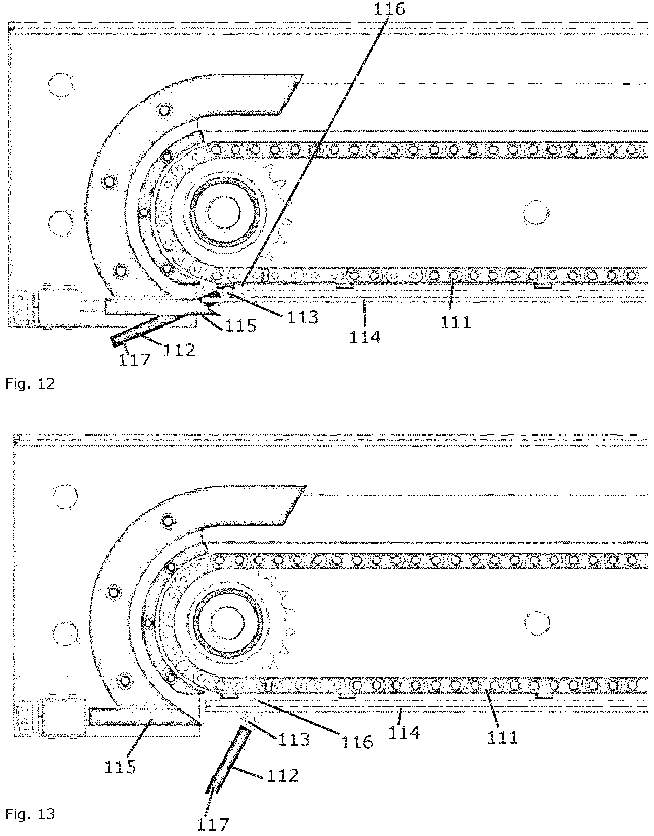

**Figures 12 and 13** show a side section of the end of a belt **111,** and a detailed representation of the sweeping element-guide system. The sweeping elements **112** here consist of a rigid holder **116** holding a sweeping plate **117.** The rigid holder **116** is rotatably provided on the belt **111.** A pin **113** is provided on the sweeping elements **112** themselves, in particular on the rigid holder **116** (typically on both sides). The sweeping element guide is provided in the form of a rail 114 extending along the bottom of the belt **111.** A deflector **115** is provided which either prevents or allows the pin **113** to move under the rail **114.** The sweeping element **112** falls down via gravity, so that the pin **113** will always try to move under the rail 114 if possible, so that the sweeping elements **112** are in the sweeping position. In this position, the rail **113** also provides extra force with which the sweeping elements **112** are pushed against the stable floor, in order to scrape along as much material as possible, and also absorbs part of the torsion on the sweeping element **112.**

When the deflector **115** is extended, this path is blocked, forcing the pin **113** above the rail **114,** and the sweeping elements **112** remain collapsed or retracted, as shown in Figure 12. When the deflector **115** is retracted, the pin **113** is allowed to move under the rail **114,** and the sweeping elements **112** remain folded out and in the sweeping position, as shown in Figure 13.

## Claims

1. Manure cleaner for hygienizing the stable floor and removing manure on a stable floor, comprising a mobile unit, wherein the mobile unit comprises a cleaning frame (42) with sweeping elements (37), suitable for moving manure, wherein the cleaning frame (42) extends in a first direction, and wherein the sweeping elements (37) are provided on the cleaning frame (42) movably along the first direction; and the manure cleaner is movable in a second direction, wherein the second direction is different from the first direction and preferably substantially perpendicular to it, **characterized in that** the mobile unit comprises at least one belt (35), with said belt secured around at least 2 tension rollers (36) on the cleaning frame (42) and configured to rotate around the tension rollers (36), wherein the tension rollers (36) extend along the second direction, wherein the sweeping elements (37) are provided on the at least one belt (35).

2. The manure cleaner according to claim 1, **characterized in that** the manure cleaner comprises a guide frame, wherein the guide frame comprises two parallel guides, suitable for positioning the mobile unit between them and moving it along them in the second direction.

3. The manure cleaner according to claim 1, **characterized in that** the manure cleaner comprises a guide frame, wherein the guide frame comprises at least one guide adapted to allow the mobile unit to move along in the second direction.

4. The manure cleaner according to any of the preceding claims 1 to 3, **characterized in that** the mobile unit comprises wheels and a motor for driving the wheels.

5. The manure cleaner according to any of the preceding claims 1 to 4, **characterized in that** the mobile unit comprises at least two parallel belts, each of which is provided with at least 2 sweeping elements, with each belt secured around 2 tension rollers on the cleaning frame and configured to rotate around the tension rollers, wherein the tension rollers extend along the second direction.

6. The manure cleaner according to the preceding claim 5, where the mobile unit's belt is a conveyor belt, wherein the sweeping elements are provided on the belt, preferably mounted on the conveyor belt with an angle relative to the longitudinal direction of the conveyor belt between 75° and 105°, preferably between 80° and 100°, and more preferably between 85° and 95°, most preferably about 90°.

7. The manure cleaner according to the preceding claim 5 or 6, the sweeping elements being substantially planar, forming an angle to the belt, where the angle is adjustable in a controlled manner between a sweeping position and a retracted position, wherein the angle in the sweeping position is between 30° and 90°, preferably between 45° and 80°, and wherein the angle in the retracted position is between 0° and 30°, preferably between 0° and 20°.

8. The manure cleaner according to the preceding claim 7, wherein the sweeping elements are provided with a lateral protrusion, preferably a pin (113), preferably provided on both upright sides of the sweeping elements, and the mobile unit comprising at least one sweeping element guide for guiding the lateral protrusion of the sweeping elements, preferably on each lateral side of the mobile unit over substantially the full length, wherein the sweeping element guide is configured to guide the lateral protrusion of the sweeping elements along a first axis and along a second axis, wherein the first axis is closer to the surface of the belt than the second axis and parallel to the second axis, and the first and second axes preferably forming a plane perpendicular to the belt;
wherein the sweeping element guide is provided at least on the side of the mobile unit directed towards the stable floor, and optionally also on the side directed away from the stable floor.

9. The manure cleaner according to any of the preceding claims 5 to 8, wherein the sweeping elements are provided with a lateral protrusion, preferably a pin (113), preferably provided on both upright sides of the sweeping elements, and the mobile unit comprising at least one sweeping element guide for guiding the lateral protrusion of the sweeping elements, preferably on each lateral side of the mobile unit over substantially the full length, wherein the sweeping element guide is configured to guide the lateral protrusion of the sweeping elements into a position wherein the sweeping elements form a maximum angle with respect to the belt of 30°, preferably of 25°, more preferably 20°, 15°, 10° or 5°, when the sweeping elements are on the side of the belt facing away from the stable floor.

10. The manure cleaner according to any of the preceding claims 5 to 9, further comprising a disposal unit (94) at an end of the cleaning frame, beyond one of the tension rollers, wherein the disposal unit is configured to receive material supplied by the sweeping elements, and comprises a curved inner surface dimensioned such that the sweeping elements are moved against the inner surface during rotation of the belt, and further comprising a collection tray (101) positioned to receive material from the disposal unit.

11. The manure cleaner according to the preceding claim 10, wherein the collection tray is provided with a horizontal auger (102) or worm screw, for displacing mass in the collection tray to a discharge zone of the collection tray.

12. The manure cleaner according to any of the preceding claims 5-11, **characterized in that** means for cleaning with liquid and/or air pressure are present on the cleaning frame, wherein the means are positioned suitable for wetting and/or cleaning the stable floor under at least one of the parallel belts.

13. The manure cleaner according to any of the preceding claims 1-12, **characterized in that** the sweeping element comprises a rubber or plastic plate.

14. The manure cleaner according to any of the preceding claims 1-13, **characterized in that** the mobile unit has a maximum height of 40 cm, preferably a maximum height of 30 cm and most preferably of 25 cm.

## Patentansprüche

1. Entmister zum Hygienisieren des Stallbodens und zum Entfernen von Mist von einem Stallboden, eine mobile Einheit umfassend, wobei die mobile Einheit ein Reinigungsgestell (42) mit Kehrelementen (37) umfasst, die geeignet sind, Mist zu bewegen, wobei sich das Reinigungsgestell (42) in einer ersten Richtung erstreckt und wobei die Kehrelemente (37) entlang der ersten Richtung beweglich an dem Reinigungsgestell (42) bereitgestellt sind, und der Entmister in einer zweiten Richtung beweglich ist, wobei sich die zweite Richtung von der ersten Richtung unterscheidet und im Wesentlichen rechtwinklig zu dieser liegt, **dadurch gekennzeichnet, dass** die mobile Einheit mindestens ein Band (35) umfasst, wobei das Band um mindestens zwei Spannrollen (36) an dem Reinigungsgestell (42) gesichert und dafür gestaltet ist, sich um die Spannrollen (36) zu drehen, wobei sich die Spannrollen (36) entlang der zweiten Richtung erstrecken, wobei die Kehrelemente (37) an dem mindestens einen Band (35) bereitgestellt sind.

2. Entmister nach Anspruch 1, **dadurch gekennzeichnet, dass** der Entmister ein Führungsgestell umfasst, wobei das Führungsgestell zwei parallele Führungen umfasst, die geeignet sind, die mobile Einheit zwischen sich zu positionieren und sie an sich entlang in der zweiten Richtung zu bewegen.

3. Entmister nach Anspruch 1, **dadurch gekennzeichnet, dass** der Entmister ein Führungsgestell umfasst, wobei das Führungsgestell mindestens eine Führung umfasst, die dafür eingerichtet ist, das Bewegen der mobilen Einheit entlang der zweiten Richtung zu ermöglichen.

4. Entmister nach einem der vorhergehenden Ansprüche 1 bis 3, **dadurch gekennzeichnet, dass** die mobile Einheit Räder und einen Motor zum Antreiben der Räder umfasst.

5. Entmister nach einem der vorhergehenden Ansprüche 1 bis 4, **dadurch gekennzeichnet, dass** die mobile Einheit mindestens zwei parallele Bänder umfasst, von denen jedes mit mindestens zwei Kehrelementen versehen ist, wobei jedes Band um zwei Spannrollen an dem Reinigungsgestell gesichert und dafür gestaltet ist, sich um die Spannrollen zu drehen, wobei sich die Spannrollen entlang der zweiten Richtung erstrecken.

6. Entmister nach dem vorhergehenden Anspruch 5, wobei das Band der mobilen Einheit ein Förderband ist, wobei die Kehrelemente an dem Band bereitgestellt sind, vorzugsweise in einem Winkel relativ zu der Längsrichtung des Förderbandes zwischen 75° und 105°, vorzugsweise zwischen 80° und 100° und bevorzugter zwischen 85° und 95°, am meisten bevorzugt etwa 90°, an dem Förderband montiert sind.

7. Entmister nach dem vorhergehenden Anspruch 5 oder 6, wobei die Kehrelemente im Wesentlichen eben sind, einen Winkel zu dem Band bilden, wobei der Winkel in einer gesteuerten Weise zwischen einer Kehrposition und einer eingefahrenen Position justierbar ist, wobei der Winkel in der Kehrposition zwischen 30° und 90° beträgt, vorzugsweise zwischen 45° und 80° und wobei der Winkel in der eingefahrenen Position zwischen 0° und 30° beträgt, vorzugsweise zwischen 0° und 20°.

8. Entmister nach dem vorhergehenden Anspruch 7, wobei die Kehrelemente mit einem seitlichen Vorsprung versehen sind, vorzugsweise einem Stift (113), der vorzugsweise an beiden aufrechten Seiten der Kehrelemente bereitgestellt ist, und wobei die mobile Einheit mindestens eine Kehrelementführung zum Führen des seitlichen Vorsprungs der Kehrelemente umfasst, vorzugsweise an jeder lateralen Seite der mobilen Einheit über im Wesentlichen die gesamte Länge, wobei die Kehrelementführung dafür gestaltet ist, den seitlichen Vorsprung der Kehrelemente entlang einer ersten Achse und entlang einer zweiten Achse zu führen, wobei die erste Achse näher an der Oberfläche des Bandes als die zweite Achse und parallel zu der zweiten Achse liegt und wobei die erste und die zweite Achse vorzugsweise eine Ebene bilden, die rechtwinklig zu dem Band liegt,
wobei die Kehrelementführung mindestens an der Seite der mobilen Einheit bereitgestellt ist, die auf den Stallboden gerichtet ist, und optional außerdem an der Seite, die von dem Stallboden weg gerichtet ist.

9. Entmister nach einem der vorhergehenden Ansprüche 5 bis 8, wobei die Kehrelemente mit einem seitlichen Vorsprung versehen sind, vorzugsweise einem Stift (113), der vorzugsweise an beiden aufrechten Seiten der Kehrelemente bereitgestellt ist, und wobei die mobile Einheit mindestens eine Kehrelementführung zum Führen des seitlichen Vorsprungs der Kehrelemente umfasst, vorzugsweise an jeder lateralen Seite der mobilen Einheit über im Wesentlichen die gesamte Länge, wobei die Kehrelementführung dafür gestaltet ist, den seitlichen Vorsprung der Kehrelemente in eine Position zu führen, in der die Kehrelemente im Verhältnis zu dem Band einen maximalen Winkel von 30° bilden, vorzugsweise von 25°, bevorzugter 20°, 15°, 10° oder 5°, wobei sich die Kehrelemente an der Seite des Bandes befinden, die von dem Stallboden weg weist.

10. Entmister nach einem der vorhergehenden Ansprüche 5 bis 9, ferner an einem Ende des Reinigungsgestells jenseits einer der Spannrollen eine Entsorgungseinheit (94) umfassend, wobei die Entsorgungseinheit dafür gestaltet ist, Material aufzunehmen, das von dem Kehrelementen zugeführt wird, und eine gekrümmte Innenfläche umfasst, die derart bemessen ist, dass die Kehrelemente während des Drehens des Bandes gegen die Innenfläche bewegt werden, und ferner eine Sammelwanne (101) umfassend, die dafür positioniert ist, Material von der Entsorgungseinheit aufzunehmen.

11. Entmister nach dem vorhergehenden Anspruch 10, wobei die Sammelwanne mit einer horizontalen Schnecke (102) oder Schneckenschraube für das Verlagern der Masse in der Sammelwanne zu einer Entladungszone der Sammelwanne versehen iist.

12. Entmister nach einem der vorhergehenden Ansprüche 5 bis 11, **dadurch gekennzeichnet, dass** an dem Reinigungsgestell Mittel zum Reinigen mit Flüssigkeit und/oder Druckluft vorhanden sind, wobei die Mittel derart positioniert sind, dass sie zum Befeuchten und/oder Reinigen des Stallbodens unter mindestens einem der parallelen Bänder geeignet sind.

13. Entmister nach einem der vorhergehenden Ansprüche 1 bis 12, **dadurch gekennzeichnet, dass** das Kehrelement eine Kautschuk- oder Kunststoffplatte umfasst.

14. Entmister nach einem der vorhergehenden Ansprüche 1 bis 13, **dadurch gekennzeichnet, dass** die mobile Einheit eine maximale Höhe von 40 cm aufweist, vorzugsweise eine maximale Höhe von 30 cm und am meisten bevorzugt von 25 cm.

## Revendications

1. Nettoyeur de fumier destiné à hygiéniser le sol d'une étable et à éliminer le fumier sur le sol d'une étable, comprenant une unité mobile, dans lequel l'unité mobile comprend un cadre de nettoyage (42) avec des éléments de balayage (37), conçus pour déplacer le fumier, dans lequel le cadre de nettoyage (42) s'étend dans une première direction, et dans lequel les éléments de balayage (37) sont placés sur le cadre de nettoyage (42) de manière mobile le long de la première direction ; et le nettoyeur de fumier est mobile dans une seconde direction, dans lequel la seconde direction est différente de la première direction et, de préférence, sensiblement perpendiculaire à celle-ci, **caractérisé en ce que** l'unité mobile comprend au moins une bande (35), ladite bande étant fixée autour d'au moins deux rouleaux tendeurs (36) sur le cadre de nettoyage (42) et configurée pour tourner autour des rouleaux tendeurs (36), dans lequel les rouleaux tendeurs (36) s'étendent le long de la seconde direction, dans lequel les éléments de balayage (37) sont placés sur l'au moins une bande (35).

2. Nettoyeur de fumier selon la revendication 1, **caractérisé en ce que** le nettoyeur de fumier comprend un cadre de guidage, dans lequel le cadre de guidage comprend deux guides parallèles, adaptés pour positionner l'unité mobile entre eux et pour la déplacer le long de ces guides dans la seconde direction.

3. Nettoyeur de fumier selon la revendication 1, **caractérisé en ce que** le nettoyeur de fumier comprend un cadre de guidage, dans lequel le cadre de guidage comprend au moins un guide conçu pour permettre à l'unité mobile de se déplacer dans la seconde direction.

4. Nettoyeur de fumier selon l'une quelconque des revendications précédentes 1 à 3, **caractérisé en ce que** l'unité mobile comprend des roues et un moteur pour entraîner les roues.

5. Nettoyeur de fumier selon l'une quelconque des revendications précédentes 1 à 4, **caractérisé en ce que** l'unité mobile comprend au moins deux bandes parallèles, chacune d'entre elles étant pourvue d'au moins deux éléments de balayage, chaque bande étant fixée autour de deux rouleaux tendeurs sur le cadre de nettoyage et configurée pour tourner autour des rouleaux tendeurs, dans lequel les rouleaux tendeurs s'étendent le long de la seconde direction.

6. Nettoyeur de fumier selon la revendication 5 précédente, dans lequel la bande de l'unité mobile est une bande transporteuse, dans lequel les éléments de balayage sont situés sur la bande, de préférence montés sur la bande transporteuse avec un angle par rapport à la direction longitudinale de la bande transporteuse compris entre 75° et 105°, de préférence entre 80° et 100°, et plus préférentiellement entre 85° et 95°, idéalement d'environ 90°.

7. Nettoyeur de fumier selon la revendication précédente 5 ou 6, les éléments de balayage étant sensiblement plats, formant un angle avec la bande, l'angle étant réglable de manière contrôlée entre une position de balayage et une position rétractée, dans lequel l'angle dans la position de balayage est compris entre 30° et 90°, de préférence entre 45° et 80°, et l'angle dans la position rétractée est compris entre 0° et 30°, de préférence entre 0° et 20°.

8. Nettoyeur de fumier selon la revendication 7 précédente, dans lequel les éléments de balayage sont pourvus d'une saillie latérale, de préférence une broche (113), de préférence prévue sur les deux côtés verticaux des éléments de balayage, et l'unité mobile comprenant au moins un guide d'éléments de balayage pour guider la saillie latérale des éléments de balayage, de préférence sur chaque côté latéral de l'unité mobile sur sensiblement toute la longueur, dans lequel le guide d'éléments de balayage est configuré pour guider la saillie latérale des éléments de balayage le long d'un premier axe et le long d'un second axe, dans lequel le premier axe est plus proche de la surface de la bande que le second axe et parallèle au second axe, et les premier et second axes formant de préférence un plan perpendiculaire à la bande ;
le guide d'éléments de balayage est prévu au moins sur le côté de l'unité mobile orienté vers le sol de l'étable, et éventuellement aussi sur le côté orienté à l'opposé du sol de l'étable.

9. Nettoyeur de fumier selon l'une quelconque des revendications précédentes 5 à 8, dans lequel les éléments de balayage sont pourvus d'une saillie latérale, de préférence une broche (113), prévue de préférence sur les deux côtés verticaux des éléments de balayage, et l'unité mobile comprenant au moins un guide d'éléments de balayage pour guider la saillie latérale des éléments de balayage, de préférence sur chaque côté latéral de l'unité mobile sur sensiblement toute la longueur, dans lequel le guide d'éléments de balayage est configuré pour guider la saillie latérale des éléments de balayage dans une position où les éléments de balayage forment un angle maximal par rapport à la bande de 30°, de préférence de 25°, plus préférentiellement de 20°, 15°, 10° ou 5°, lorsque les éléments de balayage se trouvent sur le côté de la bande opposé au sol de l'étable.

10. Nettoyeur de fumier selon l'une quelconque des revendications précédentes 5 à 9, comprenant en outre une unité d'élimination (94) au niveau d'une extrémité du cadre de nettoyage, au-delà d'un des rouleaux tendeurs, dans lequel l'unité d'élimination est configurée pour recevoir le matériau fourni par les éléments de balayage, et comprend une surface intérieure incurvée dimensionnée de manière à ce que les éléments de balayage soient déplacés contre la surface intérieure pendant la rotation de la bande, et comprenant en outre un plateau de collecte (101) positionné pour recevoir le matériau provenant de l'unité d'élimination.

11. Nettoyeur de fumier selon la revendication 10 précédente, dans lequel le plateau de collecte est équipé d'une vis horizontale (102) ou d'une vis sans fin, pour déplacer la masse dans le plateau de collecte vers une zone de décharge du plateau de collecte.

12. Nettoyeur de fumier selon l'une quelconque des revendications précédentes 5 à 11, **caractérisé en ce que** des moyens de nettoyage avec un liquide et/ou une pression d'air sont présents sur le cadre de nettoyage, dans lequel les moyens sont positionnés de manière appropriée pour mouiller et/ou nettoyer le sol de l'étable sous au moins l'une des bandes parallèles.

13. Nettoyeur de fumier selon l'une quelconque des revendications précédentes 1 à 12, **caractérisé en ce que** l'élément de balayage comprend une plaque en caoutchouc ou en plastique.

14. Nettoyeur de fumier selon l'une quelconque des revendications précédentes 1 à 13, **caractérisé en ce que** l'unité mobile a une hauteur maximale de 40 cm, de préférence une hauteur maximale de 30 cm et idéalement de 25 cm.
